(19) Europäisches Patentamt
European Patent Office
Office européen des brevets

(11) **EP 4 636 597 A1**

(12) **EUROPEAN PATENT APPLICATION**
published in accordance with Art. 153(4) EPC

(43) Date of publication:
**22.10.2025 Bulletin 2025/43**

(21) Application number: **22968435.2**

(22) Date of filing: **13.12.2022**

(51) International Patent Classification (IPC):
***G06F 11/34*** *(2006.01)*

(52) Cooperative Patent Classification (CPC):
**G06F 11/34**

(86) International application number:
**PCT/JP2022/045930**

(87) International publication number:
**WO 2024/127523 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Astemo, Ltd.**
**Tokyo 100-0004 (JP)**

(72) Inventors:
• **TSUKAHARA Kenta**
**Hitachinaka-shi, Ibaraki 312-8503 (JP)**
• **IIDA Takahiro**
**Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(54) **PROCESSING LOAD ESTIMATION SYSTEM AND PROCESSING LOAD ESTIMATION METHOD**

(57) A processing load estimation system includes: a software component input unit to which a software component having a different operation route according to an input value is input, the software component input unit including a plurality of operation elements for realizing a predetermined operation flow; a test suite input unit to which a test suite to be provided to the software component is input; a processing load estimation unit that estimates a processing load for each operation route; a simulation unit that performs a simulation of the software component based on the test suite and outputs a dynamic feature obtained from a plurality of simulation results; and a result processing unit that processes the dynamic feature output from the simulation unit, in which the result processing unit estimates a practical processing load of the software component based on the dynamic feature, a plurality of operation results corresponding to the input value, and the processing load for each route.

*FIG. 1*

## Description

Technical Field

The present invention relates to a processing load estimation system for a software component, and particularly, to a processing load estimation system capable of accurately estimating a processing load even in an evaluation performance of an entire system for development of embedded software.

Background Art

In recent years, embedded software implemented in control devices of vehicles has been increasingly diversified and complicated, and the amount of work required for designing and verifying the embedded software continues to increase. As one way to cope with this issue, there is a model-based embedded software development technology for simulation design and verification using a model.

In model-based development, it is a typical method to use a modeling tool represented by Simulink. In this method, a model that meets the control specifications can be designed by combining basic operation blocks and function blocks, and can be verified through simulation, making it possible to realize highly efficient design development as compared with a method where a modeling tool is not used.

A control device of a vehicle needs to be designed in consideration of resource constraints because CPU resources ROM/RAM capacities are severely constrained. In particular, in the field of vehicle electronic control, the demand for high processing speeds has caused a shortage of CPU resources to become apparent, and it has been proven that a model that has passed functional verification in an upstream process is not able to satisfy the constraint on CPU resources at an implementation stage, resulting in a problem such as an increase work for development due to the need to re-create the model or take additional processing load reduction measures. Therefore, for example, the invention of PTL 1 discloses a simulation device that not only simply predicts a processing load for each execution route from trace information obtained by inputting scenario data to an evaluation target system including a plurality of functional models, but also accurately estimates a processing load when a plurality of processes are simultaneously executed by performing a performance simulation according to a scheduling algorithm of a selected OS

In addition, PTL 2 discloses a model-based performance prediction system that predicts a CPU processing load of an entire model at a design upstream stage from a processing time of an operation block that is a component of the model and the number of execution cycles of the CPU while considering a delay when a plurality of processes are simultaneously activated.

Citation List

Patent Literature

PTL 1: JP 2009-258831 A
PTL 2: JP 2011-154521 A

Summary of Invention

Technical Problem

In the invention of PTL 1, scenario data is input to the evaluation system including a plurality of functional models, and a processing time is evaluated for each sequence executed in the scenario. However, this sequence does not refer to an operation route in the model, but refers to an OS-scheduled order in which the functional models are executed, and a processing time of a single functional model is a fixed value. For this reason, the processing time of the single functional model cannot be accurately estimated.

On the other hand, in the invention of PTL 2, a processing time for each basic operation block, which is a component of a model is stored in advance, and a processing time of the model is predicted. By using this method, even in a case where there are a plurality of operation routes in the model by branch processing or the like, a processing time can be predicted for each of the routes, and for example, a maximum processing time can be predicted from a route having the largest cumulative value of the processing time of the operation block. However, when this method is implemented and operated in the control device of the vehicle, it is not possible to accurately predict an average processing time.

In order to predict whether the control system mounted on each CPU core will experience a processing load collapse, it is necessary to predict a maximum processing time of all models arranged in each CPU core. In order to predict the maximum processing time of all the models, it may be considered, for example, to accumulate theoretical maximum processing times of individual models according to a result scheduled by the OS. However, when the processing time of all the models mounted on each CPU core reaches its maximum, operation routes that cause the maximum processing times of the individual models are not necessarily executed. Therefore, if a maximum processing time obtained by accumulating the maximum processing times of individual models is set as the maximum processing time of all the models, there is a problem that the maximum processing time is predicted to be larger than the actual maximum processing time.

Furthermore, in recent years, it has been started to introduce tools for verifying the timing and scheduling of embedded multi-core real-time systems. With such a tool, it is possible to verify the timing and scheduling of the entire system by inputting OS design information such as scheduling information and periodic task and interrupt task information and a processing time of each model to be scheduled. Therefore, when estimating a processing time, there is little need to have the OS scheduling function, which is a feature of PTL 1 and PTL 2, and it is more important to accurately obtain a processing load of a single model.

The present invention has been made in view of the above problems, and provides a system for estimating a practical and highly-accurate processing load even in a performance evaluation of an entire system while improving an accuracy of a processing time estimated from a single software component

Solution to Problem

In order to solve the above-described problems, a representative example of the invention disclosed in the present application is as follows. That is, a processing load estimation system including an operation device that executes predetermined processing, and a storage device to which the operation device is accessible includes: a software component input unit to which a software component having a different operation route according to an input value is input, the software component input unit including a plurality of operation elements for realizing a predetermined operation flow; a test suite input unit to which a test suite to be provided to the software component is input; a processing load estimation unit causing the operation device to estimate a processing load for each operation route; a simulation unit causing the operation device to perform a simulation of the software component based on the test suite and output a dynamic feature obtained from a plurality of simulation results; and a result processing unit causing the operation device to process the dynamic feature output from the simulation unit, in which the result processing unit estimates a practical processing load of the software component based on the dynamic feature, a plurality of operation results corresponding to the input value, and the processing load for each route.

Advantageous Effects of Invention

According to one aspect of the present invention, processing load performance can be estimated with high accuracy. Problems, configurations, and effects other than those described above will become apparent from the following description of embodiments.

Brief Description of Drawings

[FIG. 1] FIG. 1 is a system configuration diagram of a processing load estimation system according to a first embodiment.

[FIG. 2] FIG. 2 is a model diagram illustrating a control model according to the first embodiment.
[FIG. 3] FIG. 3 is a diagram illustrating operation routes of the control model according to the first embodiment.
[FIG. 4] FIG. 4 is a diagram illustrating an example of a cost database according to the first embodiment,
[FIG. 5] FIG. 5 is a diagram illustrating a cumulative cost for each operation route according to the first embodiment.
[FIG. 6] FIG. 6 is a diagram illustrating a test suite according to the first embodiment.
[FIG. 7] FIG. 7 is a diagram illustrating simulation result information according to the first embodiment.
[FIG. 8] FIG. 8 is a flowchart of processing executed by a result processing unit according to the first embodiment.
[FIG. 9] FIG. 9 is a diagram illustrating an example of a deviation calculation result according to the first embodiment.
[FIG. 10] FIG. 10 is a diagram illustrating a practical processing time according to the first embodiment.
[FIG. 11A] FIG. 11A is a flowchart of a program according to a second embodiment.
[FIG. 11B] FIG. 11B is a diagram illustrating examples of operation routes of the program according to the second embodiment.
[FIG. 12] FIG. 12 is a diagram illustrating an example of a cost database according to the second embodiment,
[FIG. 13] FIG. 13 is a flowchart of processing executed by a result processing unit according to a third embodiment.
[FIG. 14] FIG. 14 is a flowchart of processing executed by a result processing unit according to a fourth embodiment.
[FIG. 15] FIG. 15 is a diagram illustrating examples of passage rates according to the fourth embodiment.
[FIG. 16] FIG. 16 is a system configuration diagram of a processing load estimation system according to a fifth embodiment.
[FIG. 17] FIG. 17 is a diagram illustrating an example of a cost database according to the fifth embodiment,
[FIG. 18] FIG. 18 is a system configuration diagram of a processing load estimation system according to a seventh embodiment.
[FIG. 19] FIG. 19 is a data flow diagram of a control model according to the seventh embodiment.
[FIG. 20] FIG. 20 is a diagram illustrating an example of a cost database according to the seventh embodiment.
[FIG. 21] FIG. 21 is a flowchart of processing executed by a route cost evaluation unit according to the seventh embodiment.

Description of Embodiments

Hereinafter, first to seventh embodiments of the present invention will be described with reference to the drawings. In the drawings, the same reference numerals denote the same parts.

(First Embodiment)

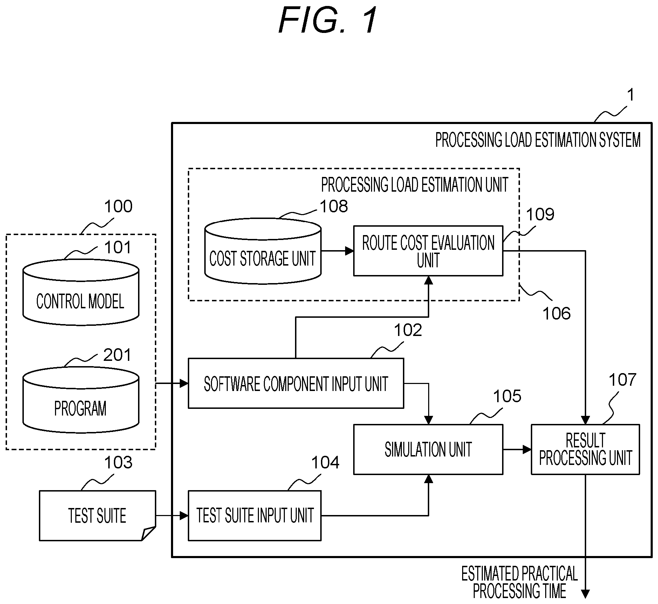

FIG. 1 is a system configuration diagram of a processing load estimation system 1 for a software component according to a first embodiment of the present invention.

The processing load estimation system 1 for a software component includes a software component input unit 102, a test suite input unit 104, a simulation unit 105, a processing load estimation unit 106, and a result processing unit 107. The software component input unit 102 receives an input of a software component 100. The test suite input unit 104 receives an input of a test suite 103. The simulation unit 105 performs a simulation using the software component 100 input to the software component input unit 102 and the test suite 103 input to the test suite input unit 104. The processing load estimation unit 106 estimates a processing load of the software component. The result processing unit 107 estimates a practical and highly-accurate processing load of the software component 100 based on a simulation result obtained by the simulation unit 105 and an estimation result obtained by the processing load estimation unit 106. The software component 100 is, for example, a control model 101 or a program 201.

In the first embodiment, a case where the software component 100 is the control model 101 will be described.

The processing load estimation unit 106 in the present embodiment estimates a processing time for each operation route. The processing load estimation unit 106 includes a cost storage unit 108 that stores a cost related to a processing load for each operation block constituting the control model 101, and a route cost evaluation unit 109 that accumulates costs of operation blocks for each route while referring to the cost storage unit 108 and estimates a processing time for each operation route of the control model 101.

In the embodiments of the present invention, as a specific example of the processing load estimation unit 106, a case where the processing load estimation unit 106 includes the cost storage unit 108 and the route cost evaluation unit 109 will be described, but another method may be adopted. For example, the processing time for each route may be stored in advance.

The processing load estimation system 1 according to the first embodiment is constituted by a computer including a processor (CPU), a memory, an auxiliary storage device, and a communication interface. The processing load estimation system 1 may include an input interface and an output interface.

The processor is an operation device that executes programs stored in the memory. Functions of the functional units (e.g., the software component input unit 102, the test suite input unit 104, the simulation unit 105, the processing load estimation unit 106, and the result processing unit 107) of the processing load estimation system 1 are implemented by the processor executing various programs. Note that some of the processes performed by the processor executing the programs may be executed by other operation devices (e.g., hardware such as an ASIC and an FPGA).

The memory includes a ROM, which is a nonvolatile storage element, and a RAM, which is a volatile storage element. The ROM stores immutable programs (e.g., a BIOS) and the like. The RAM is a high-speed volatile storage element such as a dynamic random access memory (DRAM), and temporarily stores a program executed by the processor 1 and data (e.g., the cost storage unit 108) used when the program is executed.

The auxiliary storage device is, for example, a large-capacity nonvolatile storage device such as a magnetic storage device (HDD) or a flash memory (SSD). In addition, the auxiliary storage device stores data (e.g., a file in which cost data developed in the RAM is recorded as the cost storage unit 108) used when the processor executes the program and the program executed by the processor. That is, the program is read from the auxiliary storage device, loaded into the memory, and executed by the processor, thereby implementing each function of the processing load estimation system 1.

The communication interface is a network interface device that controls communication with other devices according to a predetermined protocol.

The input interface is an interface that receives an input from a user, such as a keyboard or a mouse. For example, the input interface receives an input of a file in which cost data is recorded and stored in the auxiliary storage device. The input interface may also provide a GUI and receive an input of cost data from a user.

The output interface is an interface that outputs a program execution result in such a format as to be viewed by the user, such as a display device or a printer. For example, in the processing load estimation system 1 according to the first embodiment, the output interface outputs data for displaying an operation amount and a processing cost output by the result processing unit 107. In addition, the output interface may be a data output port that outputs a program execution result in such a format as to be viewed by the user. For example, the output interface outputs a report displaying an operation amount and a processing cost output by the result processing unit 107 in a predetermined data format (e.g., pdf or html).

Note that a terminal connected to the processing load estimation system 1 via a network may provide an input interface and an output interface.

The program executed by the processor is provided to the processing load estimation system 1 via a removable medium (a CD-ROM, a flash memory, or the like) or a network, and is stored in the nonvolatile auxiliary storage device which is a non-transitory storage medium. Therefore, the processing load estimation system 1 may include an interface for reading data from the removable medium.

The processing load estimation system 1 is a computer system configured on one computer physically or on a plurality of computers logically or physically, and may operate on a virtual computer constructed on a plurality of physical computer resources. For example, the software component input unit 102, the test suite input unit 104, the simulation unit 105, the processing load estimation unit 106, and the result processing unit 10 may operate on physically or logically separate computers, or may operate on one computer by combining a plurality of computers physically or logically.

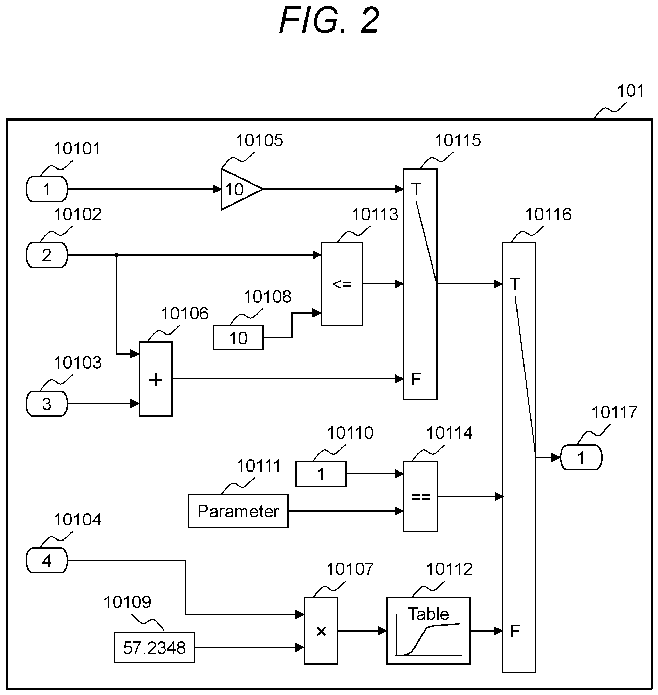

FIG. 2 is a model diagram illustrating the control model 101 according to the present embodiment.

The control model 101 includes input ports 10101, 10102, 10103, and 10104, a gain block 10105 that amplifies an input value, an addition block 10106 that adds an input value, a multiplication block 10107 that multiplies an input value, constant blocks 10108, 10109, and 10110 that output a fixed value, a constant block 10111 that outputs a parameter value, a one-dimensional table search block 10112 that performs a one-dimensional table search and outputs a corresponding result, a comparison operation block (comparison) 10113 that performs a comparison operation on the input value, a comparison operation block (equivalent) 10114 that determines whether the input value is equivalent, and switch blocks 10115 and 10116 that output a first input when the second input value is TRUE and a third input when the second input value is FALSE, and an output port 10117.

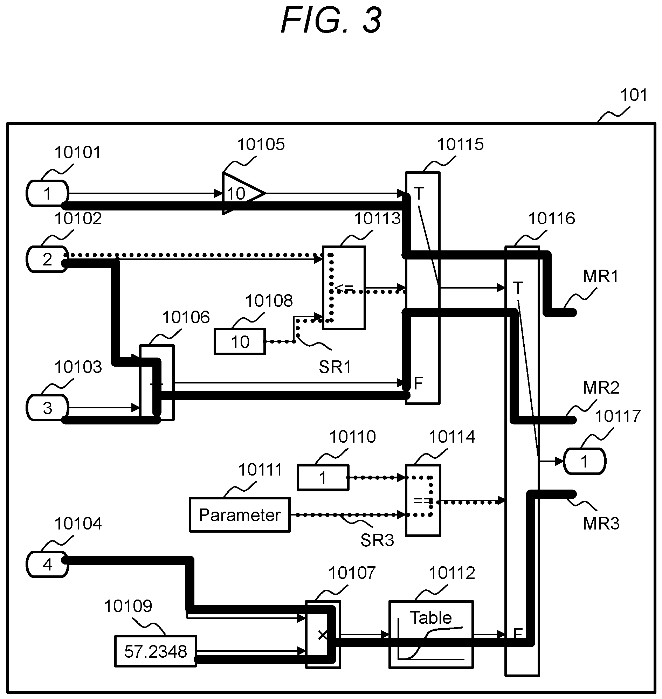

FIG. 3 is a diagram illustrating operation routes of the control model 101 according to the present embodiment.

The control model 101 includes three main operation routes MR1, MR2, and MR3 and two sub-operation routes SR1 and SR2. The operation route to be executed by the control model 101 differs depending on the input values of the input ports 10101, 10102, 10103, and 10104 and the parameter value of the constant block 10111 of the control model. The main operation route MR1 is a route executed when the result of the sub-operation route SR1 is TRUE and the result of the sub-operation route SR2 is TRUE. The main operation route MR2 is a route executed when the sub-operation route SR1 is FALSE and the sub-operation route SR2 is TRUE. The main operation route MR3 is a route executed when the sub-operation route SR2 is FALSE regardless of the result of the sub-operation route SR1.

The parameter set to the constant block 10111 used in the present embodiment is an adjustable parameter, and for example, a calibration parameter, a configuration parameter, or the like can be considered. In any case, the value can be changed after the constant block is implemented as a program. The calibration parameter is an adjustable parameter intended to improve the control performance of the control model 101, and is calibrated to an appropriate value through a vehicle traveling test or the like, for example, in an in-vehicle electronic control device. On the other hand, the configuration parameter is a parameter changed at the time of shipping a vehicle from a factory, for example, depending on the destination, the vehicle specifications, the vehicle accessories, etc.

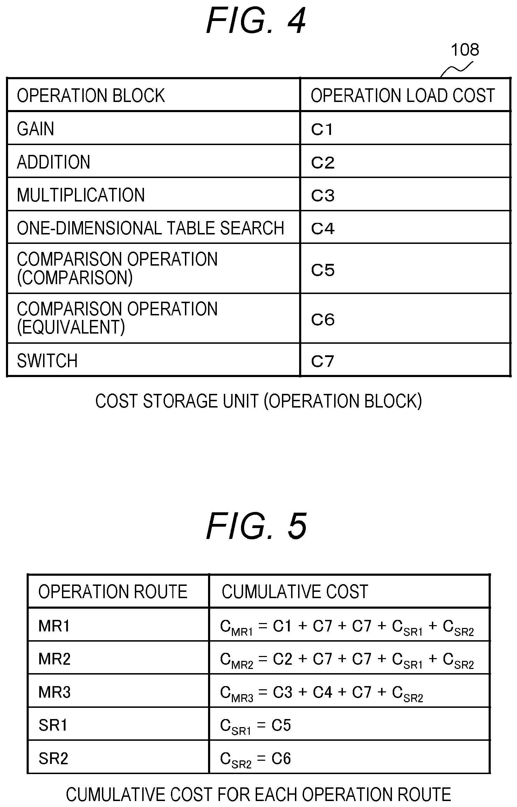

FIG. 4 is a diagram illustrating an example of a cost database included in the cost storage unit 108 according to the present embodiment, and illustrates an example of a cost database in which an operation load cost for each operation block is recorded.

The cost storage unit 108 stores in advance a cost C1 of the gain block 10105, a cost C2 of the addition block 10106, a cost C3 of the multiplication block 10107, a cost C4 of the one-dimensional table search block 10112, a cost C5 of the comparison operation block (comparison) 10113, a cost C6 of the comparison operation block (equivalent) 10114, and a cost C7 of the switch blocks 10115 and 10116. The cost storage unit 108 is referred to by the route cost evaluation unit 109. In the present embodiment, since the input ports 10101, 10102, 10103, and 10104, the constant blocks 10108, 10109, 10110, and 10111, and the output port 10117 are not accompanied by operation processing such as four fundamental arithmetic operations and logical operations, their costs are not defined.

The cost related to the processing load is, for example, a processing time measured in advance using a microcomputer simulator or an actual microcomputer with each operation block being mounted as a program. In this method, once a database is constructed by actually measuring processing times of all the operation blocks, a processing load can be easily estimated thereafter. However, since the processing time varies depending on the control device on which the program is mounted and the clock frequency, there is a problem that the processing load needs to be measured again every time the control device changes.

In general, a RISC-type microcomputer that is often used in an in-vehicle electronic control device is characterized in that all operations are basically executed in one clock cycle, and programs are executed using only a minimum number of simple commands required. In addition, a set of commands in the RISC-type microcomputer does not change so much in low-level type operations such as addition and subtraction operations, logical operations, comparison operations, and multiplication operations. On the other hand, the processing time greatly changes depending on the clock frequency of the microcomputer. Therefore, the clock cycle may be adopted as a cost of each operation block because it can be utilized in as many different microcomputer environments as possible and in order to easily estimate a processing load without re-measurement even if the clock frequency of the microcomputer changes. Since the time for executing one clock cycle is determined by the clock frequency of the microcomputer, the processing time can be easily estimated from the clock cycle even if the clock frequency of the microcomputer changes.

Next, the processing load estimation unit 106 in the present embodiment will be described in detail. The route cost evaluation unit 109 analyzes the control model 101 input via the software component input unit 102, and extracts three main operation routes MR1, MR2, and MR3 and two sub-operation routes SR1 and SR2 that determine which main operation route is to be executed of FIG. 3. Thereafter, costs for each operation route are accumulated while referring to the costs C1, C2, C3, C4, C5, C6, and C7 stored in advance in the cost storage unit 108 of FIG. 4, and processing times for the three main operation routes MR1, MR2, and MR3 are estimated.

FIG. 5 is a diagram illustrating a cumulative cost corresponding to a processing time for estimating each of the main operation routes MR1, MR2, and MR3.

Since the main operation route MR1 is executed when the sub-operation route SR1 is TRUE and the sub-operation route SR2 is TRUE, a cumulative cost $C_{MR1}$ of the main operation route MR1 is determined by a total value of a cumulative cost of operation blocks arranged on the main operation route MR1 and a cumulative cost of operation blocks arranged on the sub-operation routes SR1 and SR2. Specifically, the cost C1 of the gain block 10105 and the cost C7 of the switch blocks 10115 and 10116, which are operation blocks of the main operation route MR1, a cost $C_{SR1}$ of the sub-operation route SR1, and a cost $C_{SR2}$ of the sub-operation route SR2 are all accumulated, and a cumulative cost $C_{MR1}$ is obtained as $C1+C7+C7+C_{SR1}+C_{SR2}$. Note that the cost $C_{SR1}$ of the sub-operation route SR1 is the cost C5 of the comparison operation (comparison) block 10113, which is an operation block arranged on the sub-operation route SR1,

The cost CSR2 of the sub-operation route SR2 is the cost C6 of the comparison operation (equivalent) 10114, which is an operation block arranged on the sub-operation route SR2. Therefore, the cumulative cost $C_{MR1}$ of all the operation blocks executed when the main operation route MR1 is selected is obtained by $C1+C7+C7+C5+C6$. In a similar manner, a cumulative cost $C_{MR2}$ of all operation blocks executed when the main operation route MR2 is selected is obtained by $C2+C7+C7+C5+C6$.

The main operation route MR3 is executed when the sub-operation route SR2 is FALSE regardless of the result of executing the sub-operation route SR1. Therefore, in the present embodiment, the cost of SR1 is not accumulated, and a cumulative cost $C_{MR3}$ of MR3 is obtained by a total value of a cumulative cost of the operation blocks arranged on the main operation route MR3 and the sub-operation route SR2. Specifically, the cost C3 of the multiplication block 10107, which is an operation block of the main operation route MR3, the cost C4 of the one-dimensional table search block 10112, the cost C7 of the switch block 10115, and the cost CSR2 of the sub-operation route SR2, that is, C6, are all accumulated to obtain a cumulative cost $C_{MR3}$ of the main operation route MR3. Therefore, a cumulative cost of operation blocks executed when the main operation route MR3 is executed is obtained by $C3+C4+C7+C6$.

In addition, the cumulative costs of the main operation routes MR1, MR2, and MR3 are compared, and the route having the highest cumulative cost is a route having a theoretically maximum processing time of the control model 101. Similarly, the route having the lowest cumulative cost is a route having a theoretically minimum processing time of the control model 101.

However, the routes having the maximum processing time and the minimum processing time estimated by the processing load estimation unit 106 are not routes executed necessarily in an actual use case, for example, in an actual vehicle travel. Since an input of a model to be estimated is determined by pre-processing the model, the route having the maximum processing time or the minimum processing time may not be executed because an input for executing such a route is not necessarily generated. Alternatively, there is a possibility that the route having the maximum processing time or the minimum processing time is not executed in a case where the route is unreachable even if any data is input or depending on an adjustable parameter. For this reason, the maximum processing time and the minimum processing time obtained by the above-described method are not a maximum processing time and a minimum processing time within a practical range, and it is necessary to estimate a practical processing time. In addition, there is also a problem that, when a maximum processing time of the entire system is estimated, if theoretical maximum processing times of the models are accumulated, an excessive maximum processing time is estimated.

Therefore, the result processing unit 107 solves such a problem by using a plurality of operation results newly obtained by the simulation unit 105 based on the result of the route cost evaluation unit 109.

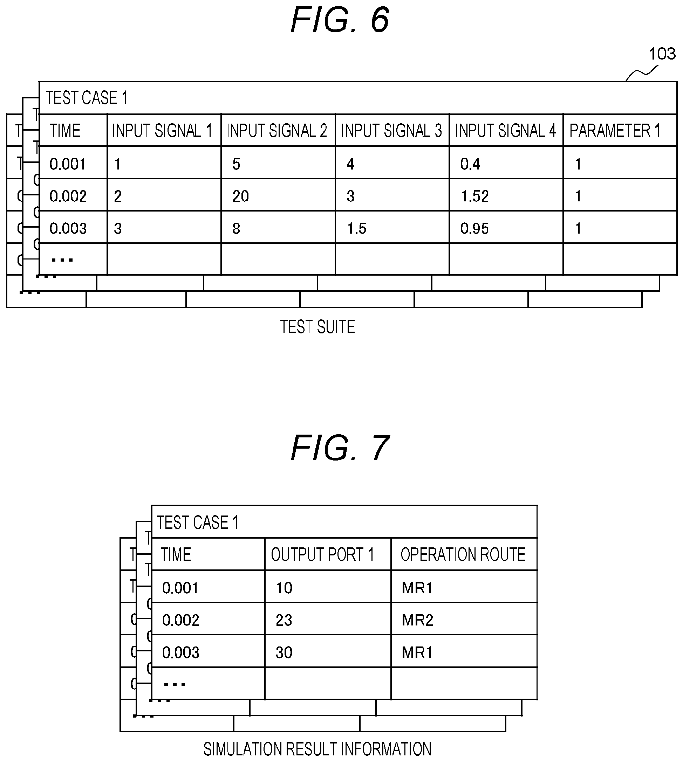

The test suite 103 illustrated in FIG. 6 is an aggregate of a plurality of test cases, and is input data input to the control model 101. The input data is generally classified into two types of data: signals and parameters. Specifically, input signal 1, input signal 2, input signal 3, and input signal 4 of the test suite 103 are input to the input ports 10101, 10102, 10103, and 10104 of the control model 101, respectively. In addition, parameter 1 of the test suite 103 is a parameter value output by the constant block 10111 of the control model 101.

The simulation unit 105 inputs the test suite 103 to the input control model 101 and performs a simulation. FIG. 7 illustrates a simulation result output by the simulation unit 105. The simulation result includes not only output data for each time step output from the output port 10117 but also information on which operation route has been executed.

The result processing unit 107 analyzes the simulation result (FIG. 7) output by the simulation unit 105 and calculates a plurality of operation results. Furthermore, the result processing unit 107 determines a final estimated processing time by combining the estimated processing time for each operation route estimated by the processing load estimation unit 106 and the plurality of operation results calculated by the simulation unit 105.

In the present embodiment, a more practical processing load is estimated using a dynamic feature that is a value related to a plurality of operation amounts obtained through analysis by the result processing unit 107. An average value or a standard deviation of operation loads may be used as the value related to operation amounts by the result processing unit 107.

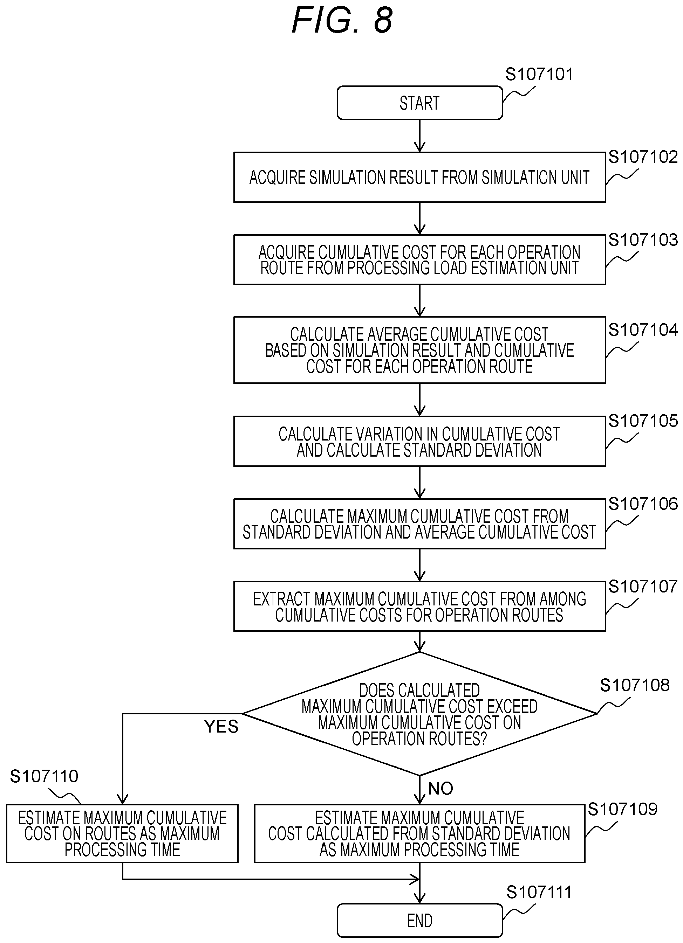

FIG. 8 is a flowchart of processing executed when the result processing unit 107 estimates a practical maximum processing load according to the first embodiment of the present invention.

As illustrated in the flowchart, the result processing unit 107 starts the processing from step S107101.

In step S107102, the result processing unit 107 acquires a simulation result (FIG. 7) from the simulation unit 105.

In step S107103, the result processing unit 107 acquires a cumulative cost (FIG. 5) for each operation route from the processing load estimation unit 106.

In step S107104, the result processing unit 107 calculates an average cumulative cost of the test suite based on operation route information for each time step acquired from the simulation result (FIG. 7) and the cumulative cost for each operation route (FIG. 5).

In step S107105, the result processing unit 107 calculates a variation (deviation) in cumulative cost by using the cumulative cost for each time step and the average cumulative cost, and then calculates a standard deviation.

In step S107106, the result processing unit 107 estimates a maximum cumulative cost that is highly likely to be taken in an actual use case, by multiplying the standard deviation by a coefficient and adding the result to the average value.

In step S107107, the result processing unit 107 extracts the largest cumulative cost from among the cumulative costs (FIG. 5) for the respective operation routes.

In step S107108, the result processing unit 107 determines whether the maximum cumulative cost that is highly likely to be taken in the actual use case exceeds the maximum cumulative cost on the operation routes. When the calculated maximum cumulative cost is smaller than the maximum cumulative cost on the operation routes (NO), the processing proceeds to step S107109. When the calculated maximum cumulative cost exceeds the maximum cumulative cost on the operation routes (YES), the processing proceeds to step S107110.

In step S107109, the result processing unit 107 estimates the maximum cumulative cost calculated using the standard deviation as a maximum processing time, and outputs the maximum processing time.

In step S107110, the result processing unit 107 estimates the maximum cumulative cost on the routes as a maximum processing time, and outputs the maximum processing time.

In step S107111, the result processing unit 107 ends the processing.

A method of calculating an average cumulative cost $C\mu$ of the test suite in step S107104 will be described. The average cumulative cost $C\mu$ is obtained by summing up all the cumulative costs for the respective time steps included in the test suite and dividing the sum by the total number n.

[Mathematical formula 1]

$$C_\mu = \frac{C_1 + C_2 + C_3 + \ldots C_n}{n}$$

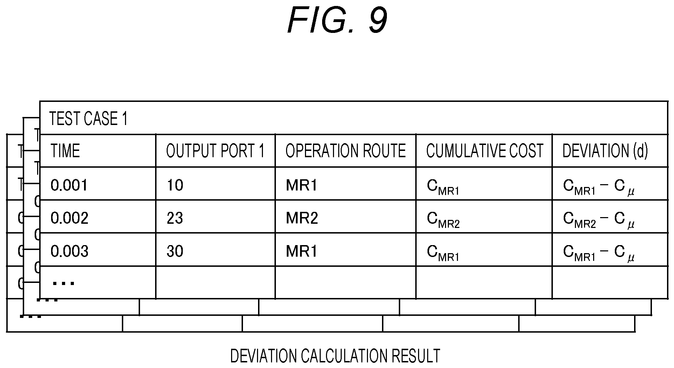

Next, a method of calculating a standard deviation $\sigma$ in step S107105 will be described. In order to obtain a standard deviation, first, a deviation d is obtained. The deviation d can be obtained by subtracting the average cumulative cost $C\mu$ from each cumulative cost Ci of the test suite. An example of a result of calculating a deviation d is illustrated in FIG. 9. The standard deviation can be obtained by a square root of a value obtained by squaring the deviation d and dividing the result by the total number n of data.

[Mathematical formula 2]

$$\sigma = \sqrt{\frac{1}{n} \sum_{i}^{n} (C_i - C_\mu)^2}$$

The standard deviation is one of statistical indicators indicating a degree of variation, and the standard deviation $\sigma$ can be used to determine a variation of a numerical value relative to the average. When the variation is large, the standard deviation $\sigma$ is large, and when the variation is small, the standard deviation $\sigma$ is small. Generally, there is a 68.3% probability that observed data falls within the average value $\pm\sigma$, a 95% probability that observed data falls within the average value $\pm 2\sigma$, and a 99.7% probability that observed data falls within the average value $\pm 3\sigma$.

Next, a method of determining a practical maximum processing load in steps S107108, S107109, and S107110 will be described. In the present embodiment, a practical maximum processing load $PC_{max}$ is obtained by the following calculation formula using the average cumulative cost $C\mu$, the standard deviation $\sigma$, and the adjustable coefficient k. At this time, k is an adjustable parameter coefficient, and can be corrected to a certain value by the user depending on the feature of the system and the degree of maturation of the test suite. However, since the maximum cumulative cost $C_{max}$ on the routes

extracted in step S107107 is a theoretical maximum cumulative cost, a result calculated using the standard deviation should not exceed $C_{max}$. When the maximum cumulative cost calculated using the standard deviation exceeds the theoretical maximum cumulative cost $C_{max}$, the practical maximum processing load $PC_{max}$ is set to $C_{max}$.

[Mathematical formula 3]

$$PC_{max} = \begin{cases} C_\mu + k\sigma & (C_\mu + k\sigma) \leq C_{max} \\ C_{max} & (C_\mu + k\sigma) > C_{max} \end{cases}$$

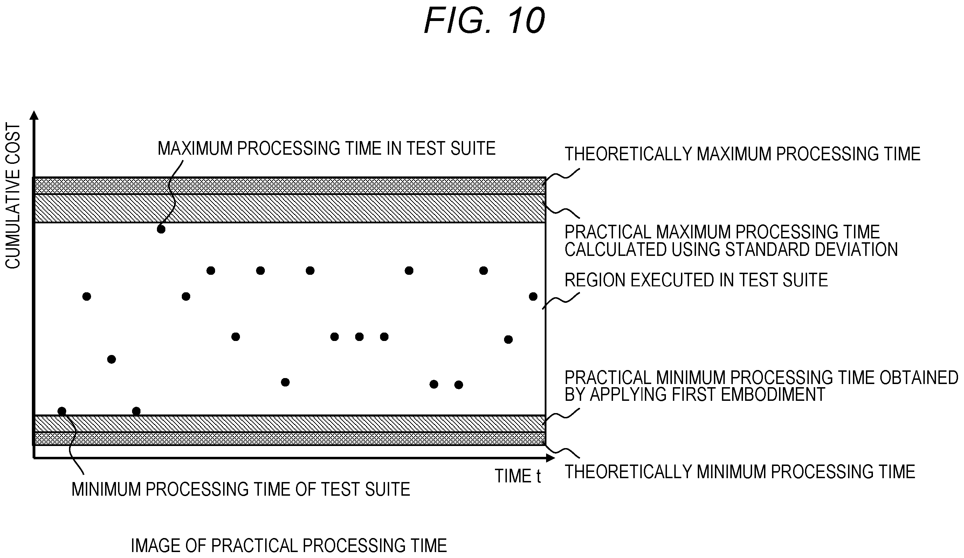

The processing load estimation system considering the variation according to the first embodiment is capable of obtaining a practical maximum processing time in consideration of a variation which is a dynamic feature in a region as illustrated in FIG. 10. Note that, in the present embodiment, the system for estimating a practical maximum processing time has been described, but a practical minimum processing time can also be calculated by using a similar method.

According to the present embodiment, it is possible to only eliminate routes that are not executed in actual use cases, but also predict a maximum processing time from the viewpoint of statistics within an actual operation range by using the standard deviation even in a case where a coverage rate of a case where an input test suite is actually used is low. As a result, it is possible to suppress the conventional problem that a prediction result is excessive when a maximum processing time of an entire system is predicted by accumulating theoretical maximum processing times of respective models.

The present embodiment has been described particularly focused on the case in which a processing time estimated using a standard deviation is output, but the average cumulative cost calculated in step S107104 of the flowchart of FIG. 8 may be estimated as an average processing time.

Furthermore, in a case where a coverage rage of a case where a test suite is actually used is high, a maximum processing time and a minimum processing time in the test suite of FIG. 10 may be estimated as a practical maximum processing time and a practical minimum processing time without using the standard deviation.

(Second Embodiment)

In the second embodiment, it will be described that, in a case where the software component 100 is the program 201, a practical processing load can also be estimated in the program 201, as well as the control model 101. In the second embodiment, differences from the first embodiment will be mainly described, and descriptions of configurations and processes that are the same as those in the first embodiment will be omitted.

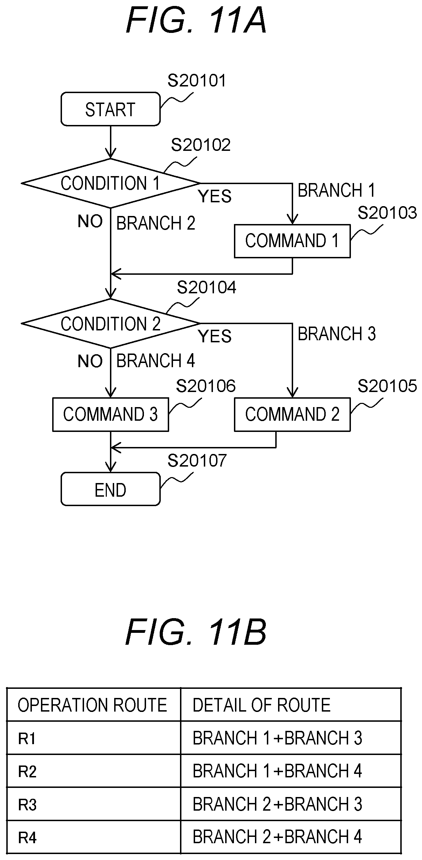

FIG. 11A is a flowchart of the program 201 according to the present embodiment, and FIG. 11B is a diagram illustrating examples of operation routes of the program 201 according to the present embodiment.

As illustrated in the flowchart, the program 201 starts the processing from step S20101.

In step S20102, the program 201 determines whether condition 1 is satisfied. When condition 1 is satisfied (YES), the processing proceeds to step S20103. When condition 1 is not satisfied (NO), the processing proceeds to step S20104.

In step S20103, the program 201 executes command 1, and then the processing proceeds to step S20104.

In step SS20104, the program 201 determines whether condition 2 is satisfied. When condition 2 is satisfied (YES), the processing proceeds to step SS20105. When condition 2 is not satisfied (NO), the processing proceeds to step SS20106.

In step S20105, the program 201 executes command 2.

In step S20106, the program 201 executes command 3.

In step S20107, the program 201 ends the processing.

As illustrated in FIG. 11B, the operation routes of the program 201 include four routes: operation route R1 in which branch 1 and branch 3 are executed, operation route R2 in which branch 1 and branch 4 are executed, operation route R3 in which branch 2 and branch 3 are executed, and operation route R4 in which branch 2 and branch 4 are executed. Therefore, the program 201 has a plurality of operation routes, and can be treated in the same manner as the control model 101 in that a condition determination result changes and a different route is executed depending on the input.

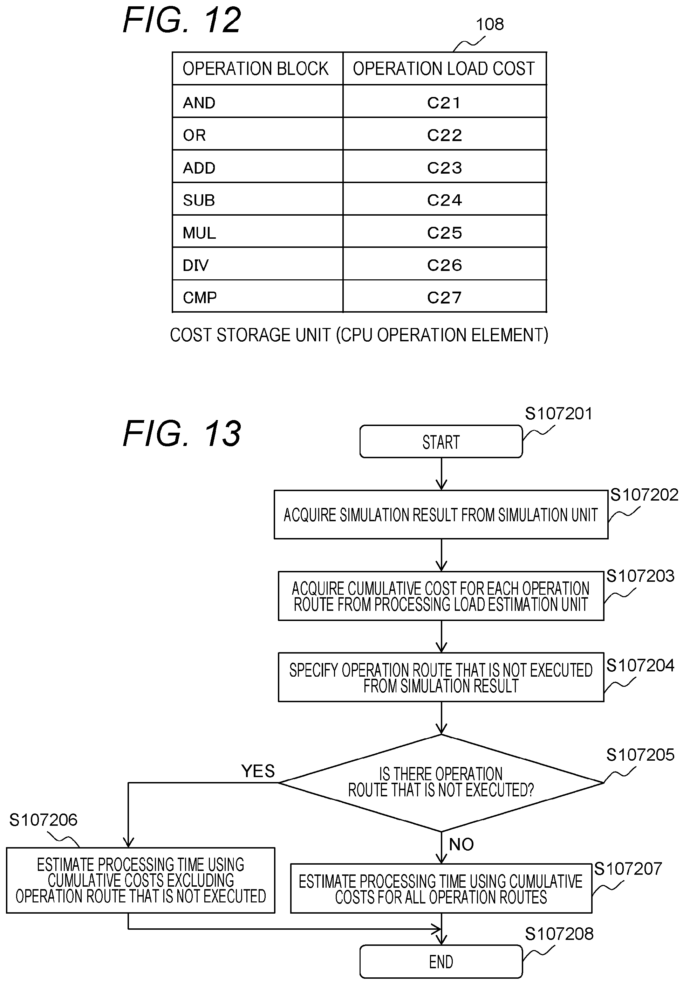

FIG. 12 is a diagram illustrating an example of a cost database included in the cost storage unit 108 according to the present embodiment, and illustrates an example of a cost database in which an operation load cost for each CPU operation element is recorded.

The cost storage unit 108 according to the first embodiment stores a cost for each operation block, whereas the cost storage unit 108 according to the present embodiment stores a processing load for each operation element of the CPU constituting the program 201 as a cost. For example, the user can arbitrarily define costs such as C23 for addition (ADD) and C25 for multiplication (MUL).

In the cost storage unit 108 for the program 201 according to the present embodiment, the cost is stored to correspond to the operation element of the CPU. For example, the costs may be stored for the respective operators of the four fundamental arithmetic operations.

Next, the operation of the route cost evaluation unit 109 when the program 201 is input will be described in detail. In the first embodiment, costs of blocks for each route are accumulated, but in the present embodiment, costs of operation elements of the CPU for each operation route are accumulated.

For example, the route cost evaluation unit 109 may analyze the syntax of the program 201 and extract operation elements of the CPU for each operation route. Alternatively, the route cost evaluation unit 109 may compile a program, convert the program into an assembler level, and extract operation elements of the CPU.

As described above, by estimating a processing load from the program 201 rather than estimating a processing load from the control model 101, the processing load can be estimated using an operation element close to the actual operation, and the processing load can be estimated with higher accuracy. On the other hand, it is not possible to estimate a processing load until the program 201 is designed, resulting in a concern that a large amount of rework will occur compared to that in the method using the control model 101.

According to the present embodiment, a practical processing load can be estimated in the program 201 as well as the control model 101.

(Third Embodiment)

In the third embodiment, a more practical processing load is estimated using passage information for each operation route, which is a dynamic feature as one of a plurality of operation results obtained through analysis by the result processing unit 107. Specifically, the result processing unit 107 specifies an operation route that is not executed based on the passage information, and excludes the operation route that is not executed from the estimation target, thereby estimating a more practical processing time. In the third embodiment, differences from the above-described embodiments will be mainly described, and descriptions of configurations and processes that are the same as those in the above-described embodiments will be omitted. In addition, the software component 100 may be either the control model 101 or the program 201, but in the third embodiment, the control model 101 will be described as an example.

FIG. 13 is a flowchart of processing executed by the result processing unit 107 according to the present embodiment.

As illustrated in the flowchart, the result processing unit 107 starts the processing from step S107201.

In step S107202, the result processing unit 107 acquires a simulation result (FIG. 7) from the simulation unit 105.

In step S107203, the result processing unit 107 acquires a cumulative cost (FIG. 5) for each operation route from the processing load estimation unit 106.

In step S107204, the result processing unit 107 analyzes a result of a simulation performed by the simulation unit 105, and specifies an operation route that is not executed.

In step S107205, the result processing unit 107 determines whether there is an operation route that is not executed. When there is an operation route that is not executed (YES), the processing proceeds to step S107206. When there is no operation route that is not executed (NO), the processing proceeds to step S107207.

In step S107206, the result processing unit 107 estimates a processing time by using cumulative costs other than the cumulative cost for the operation route that is not executed among the cumulative costs for the respective operation routes obtained by the simulation unit 105.

In step S107207, the result processing unit 107 estimates a processing time using all the cumulative costs for the respective operation routes obtained by the simulation unit 105.

In step S107208, the result processing unit 107 ends the processing.

For example, the largest cumulative cost among the cumulative costs excluding the operation route that is not executed may be estimated as a maximum processing time. In addition, the smallest cumulative cost among the cumulative costs excluding the operation route that is not executed may be estimated as a minimum processing time. In addition, an average value of the cumulative costs excluding the operation route that is not executed may be calculated and estimated as an average processing load.

According to the present embodiment, it is possible to estimate a processing time more practically with higher accuracy by excluding a route that is not executed in an actual use case.

(Fourth Embodiment)

In a fourth embodiment, a more practical processing load is estimated using a passage rate indicating a frequency of passage for each operation route, which is a dynamic feature as one of a plurality of operation results obtained through analysis by the result processing unit 107. Specifically, a system in which the result processing unit 107 estimates a more practical processing time by excluding an operation route having a passage rate smaller than a predetermined threshold value from the estimation target will be described. In the fourth embodiment, differences from the above-described embodiments will be mainly described, and descriptions of configurations and processes that are the same as those in the above-described embodiments will be omitted. In addition, the software component 100 may be either the control model 101 or the program 201, but in the fourth embodiment, the control model 101 will be described as an example.

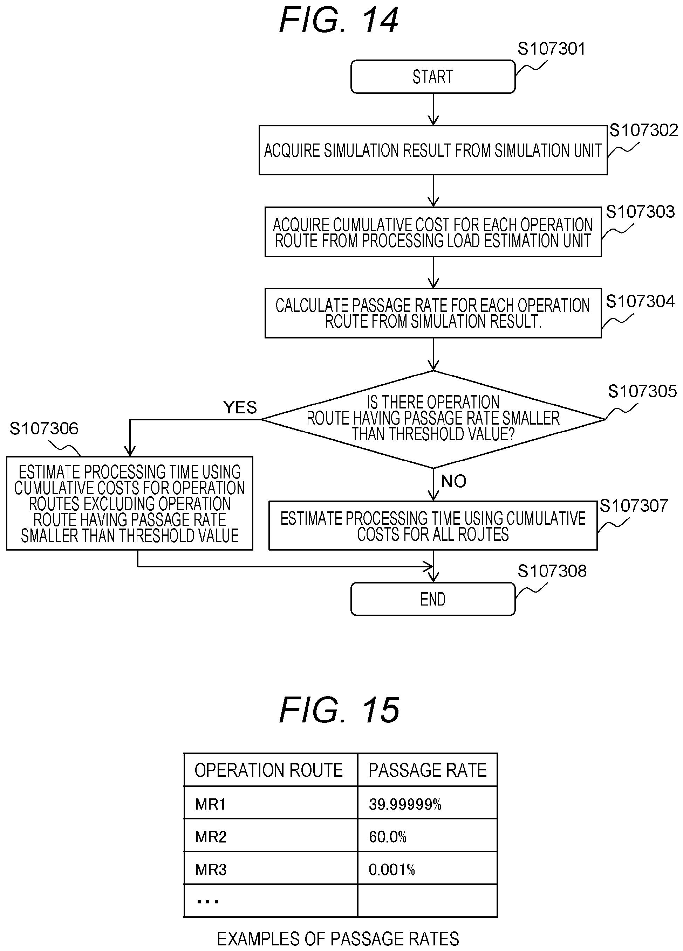

FIG. 14 is a flowchart of processing executed by the result processing unit 107 according to the present embodiment.

As illustrated in the flowchart, the result processing unit 107 starts the processing from step S107301.

In step S107302, the result processing unit 107 acquires a simulation result (FIG. 7) from the simulation unit 105.

In step S107303, the result processing unit 107 acquires a cumulative cost (FIG. 5) for each operation route from the processing load estimation unit 106.

In step S107304, the result processing unit 107 analyzes a result of a simulation performed by the simulation unit 105, and calculates a passage rate for each operation route.

In step S107305, the result processing unit 107 determines whether there is an operation route having a small passage rate, by comparing the passage rate for each operation route with a threshold value set in advance by the user. When there is an operation route having a small passage rate (YES), the processing proceeds to step S107306. When there is no operation route having a small passage rate (NO), the processing proceeds to step S107307.

In step S107306, the result processing unit 107 estimates a processing time using cumulative costs for operation routes excluding the operation route having a small passage rate.

In step S107307, the result processing unit 107 estimates a processing time using the cumulative costs for all the operation routes.

In step S107308, the result processing unit 107 ends the processing.

FIG. 15 is a diagram illustrating examples of passage rates in the control model 101.

In a case where the passage rates of the operation routes MR1, MR2, and MR3 of the control model 101 are 39.9999%, 60.0%, and 0.0001%, respectively, when the threshold value of the passage rate is 0.001% in step S107305, the passage rate of the operation route MR3 is lower than the threshold value, and accordingly, a processing load is estimated using the cumulative costs for MR1 and MR2 while excluding the cumulative cost for the operation route MR3.

For example, the largest cumulative cost among the cumulative costs excluding the operation route having the passage rate smaller than the threshold value may be estimated as a maximum processing time. Alternatively, the smallest cumulative cost among the cumulative costs excluding the operation route having the passage rate smaller than the threshold value may be estimated as a minimum processing time. In addition, an average value of the cumulative costs excluding the operation route having the passage rate smaller than the threshold value may be calculated and estimated as an average processing load.

At a timing when the maximum processing time and the minimum processing time of the entire system are reached, there is an extremely small possibility that an operation route having a low frequency of execution is executed in each software component. According to the present embodiment, by excluding an operation route having a low frequency of execution although there is a possibility of execution in an actual use case, it is possible to solve the above-described problem and improve the accuracy in estimating a maximum processing load and a minimum processing load of the entire system.

(Fifth Embodiment)

In a fifth embodiment, a system in which the processing load estimation unit 106 estimates a processing load in consideration of a latency, which is a communication delay time of memory access will be described. In the fifth embodiment, differences from the above-described embodiments will be mainly described, and descriptions of configurations and processes that are the same as those in the above-described embodiments will be omitted. In addition, the software component 100 may be either the control model 101 or the program 201, but in the fifth embodiment, the control model 101 will be described as an example.

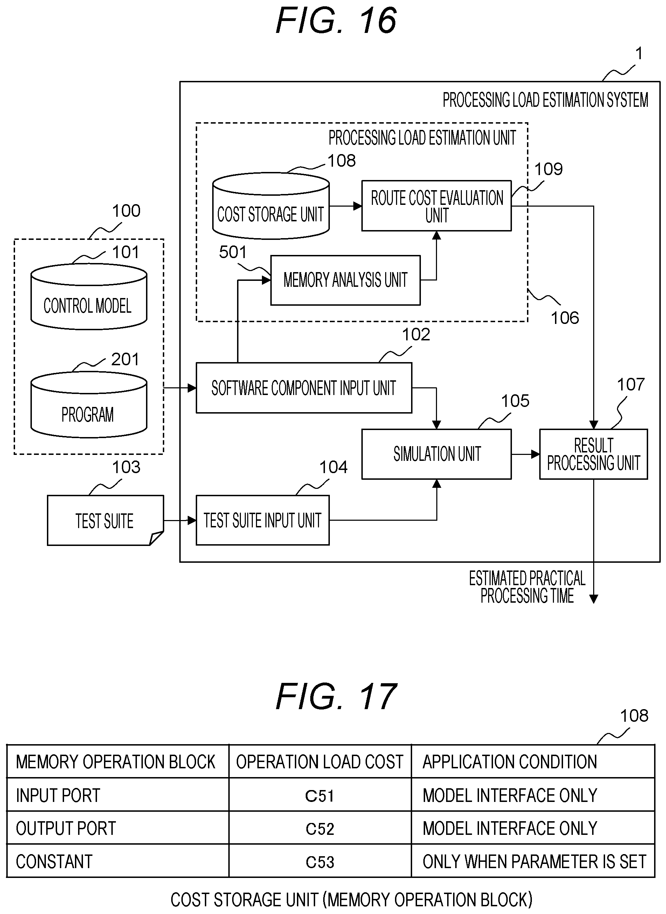

FIG. 16 is a system configuration diagram of a processing load estimation system 1 for a software component according to the fifth embodiment of the present invention. A difference from the system configuration diagram (FIG. 1) of the first embodiment is that a memory analysis unit 501 is added to the processing load estimation unit 106.

The memory analysis unit 501 extracts an operation element related to memory access of the software component 100 as a memory attribute, and sends the extracted operation element to the route cost evaluation unit 109. The route cost evaluation unit 109 acquires the extraction result of the memory analysis unit 501, reads a cost of a latency of memory access stored in advance from the cost storage unit 108, and accumulates the cost of the latency together with the cumulative cost for each operation route.

The input ports 10101, 10102, 10103, and 10104 of the control model 101 illustrated in FIG. 2 are input interfaces of the control model 101, and the output port 10117 is an output interface of the control model 101. For example, when a program is designed with an input/output interface for global variable access, a cost corresponding to a latency of global variable read processing is assigned to the input ports 10101, 10102, 10103, and 10104, and a cost corresponding to a latency of global variable write processing is assigned to the output port 10117.

The constant block 10111 that outputs a parameter value of the control model 101 illustrated in FIG. 2 reads the parameter. In the present embodiment, for example, a cost corresponding to a latency for reading a calibration parameter from a memory area is allocated to the constant block 10111.

FIG. 17 is a diagram illustrating an example of a cost database included in the cost storage unit 108 according to the present embodiment, and illustrates an example of a cost database in which an operation load cost for each memory operation block is recorded.

The route cost evaluation unit 109 detects a block corresponding to an application condition predetermined by the user as a memory operation block, accumulates a cost of an operation block together with a cost of the memory operation block, and calculates a cumulative cost for each operation route. For example, in the main operation route MR1, a cost corresponding to a latency for reading the global variable of the input port 10101, reading the parameter of the constant block 10111, and writing the global variable of the output port 10117 is added. Therefore, a cumulative cost $C_{MR1}$ of all the operation blocks and the memory operation blocks executed when the main operation route MR1 is selected is obtained by C51+C1+C7+C7+C5+C53+C6+C52. Similarly, a cumulative cost $C_{MR2}$ of all the operation blocks and the memory operation blocks executed when the main operation route MR2 is selected is obtained by C51+C51+C2+C7+C7+C5+C53+C6+C52. In addition, a cumulative cost $C_{MR3}$ of all the operation blocks and the memory operation blocks executed when the main operation route MR3 is selected is obtained by C51+C3+C4+C7+C53+C6+C52.

According to the present embodiment, a processing time can be estimated with higher accuracy by considering the latency of memory access in addition to the processing time involved in the operation.

(Sixth Embodiment)

In a sixth embodiment, a system in which, in a case where a combination of specific blocks stored in advance is detected, the processing load estimation unit 106 estimates a processing load by correcting the cost to a cost different from the original cost (a cost associated with the combination of specific blocks). In the sixth embodiment, differences from the above-described embodiments will be mainly described, and descriptions of configurations and processes that are the same as those in the above-described embodiments will be omitted. In addition, the software component 100 may be either the control model 101 or the program 201, but in the sixth embodiment, the control model 101 will be described as an example.

In the sub-operation route SR2 illustrated in FIG. 3, the comparison operation block (equivalent) 10114 determines whether the parameter is 1, and inputs a logical value that is a determination result to the switch block 10116. Thereafter, the switch block determines the input logical value, and selects a route according to the logical value. At this time, since processing occurs in each of the comparison operation block (equivalent) 10114 and the switch block 10116, the respective costs are accumulated.

However, an actual program is generally designed such that the comparison operation processing of the comparison operation block (equivalent) 10114 is omitted, and it is directly determined whether the parameter is TRUE or FALSE, particularly by a conditional expression that is an if sentence, during the processing of the switch block 10116. Therefore, in order to take into account optimization that occurs in the process of conversion from such a model to a program, for example, in a case where modeling is performed in a flow from the comparison operation block to the switch block, the route cost evaluation unit 109 does not simply refer to and accumulate the cost of the comparison operation block 10114 and the cost of the switch block 10116, but refers to a new cost. In addition, the cost storage unit 108 stores a combination of the costs of the comparison operation block 10114 and the switch block 10116 in advance.

According to the present embodiment, a cumulative cost can be calculated in consideration of the influence of optimization, and a processing load can be estimated with higher accuracy by approaching an actual operation.

(Seventh Embodiment)

In a seventh embodiment, a system in which the processing load estimation unit 106 estimates a processing load in consideration of a data flow will be described. In the seventh embodiment, differences from the above-described embodiments will be mainly described, and descriptions of configurations and processes that are the same as those in the above-described embodiments will be omitted. In addition, the software component 100 may be either the control model 101 or the program 201, but in the seventh embodiment, the control model 101 will be described as an example.

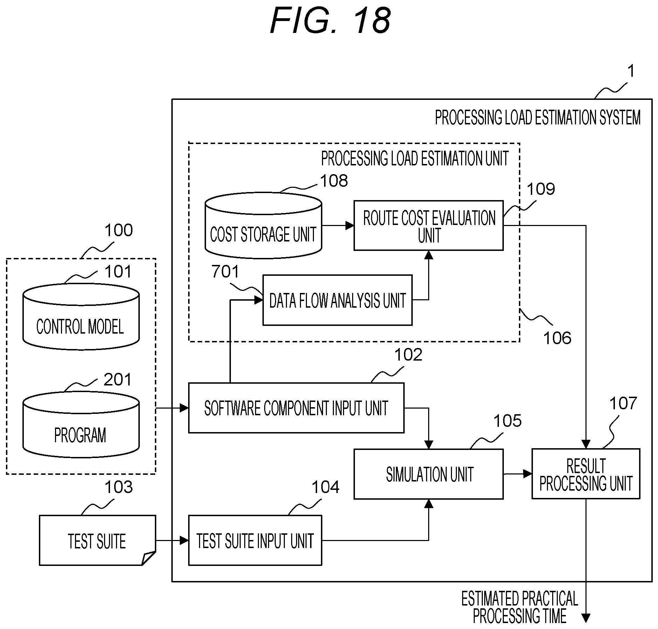

FIG. 18 is a system configuration diagram illustrating a processing load estimation system 1 for a software component in consideration of a data flow according to an embodiment of the present invention. This processing load estimation system is different from the processing load estimation system (FIG. 1) according to the first embodiment in that a data flow analysis unit 701 is newly added to the processing load estimation unit 106.

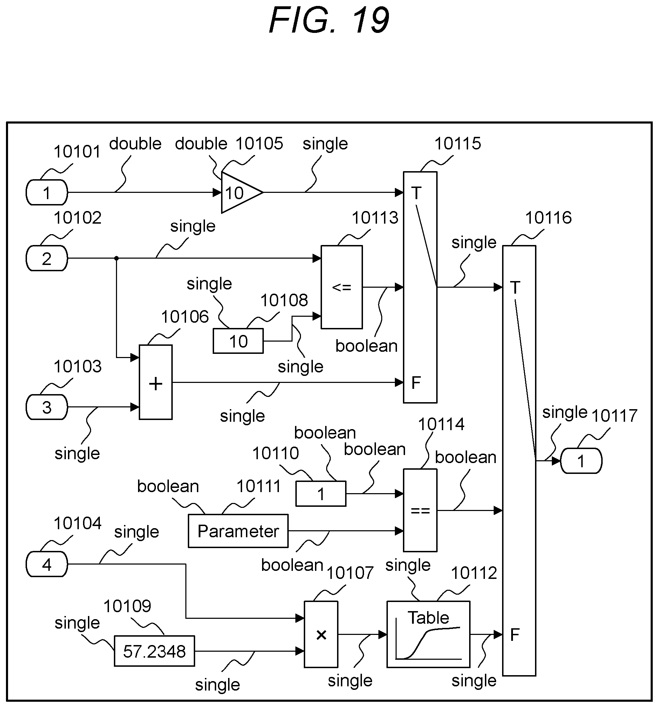

The data flow analysis unit 701 analyzes a data flow of the control model 101 as illustrated in FIG. 19, and specifies data types of signal lines connecting blocks to each other. Further, the data flow analysis unit 701 analyzes blocks in which constants and parameters are set, such as the gain block 10105, the constant blocks 10108, 10109, 10110, and 10111, and the one-dimensional table search block 10112, and specifies data types of the set constants and parameters.

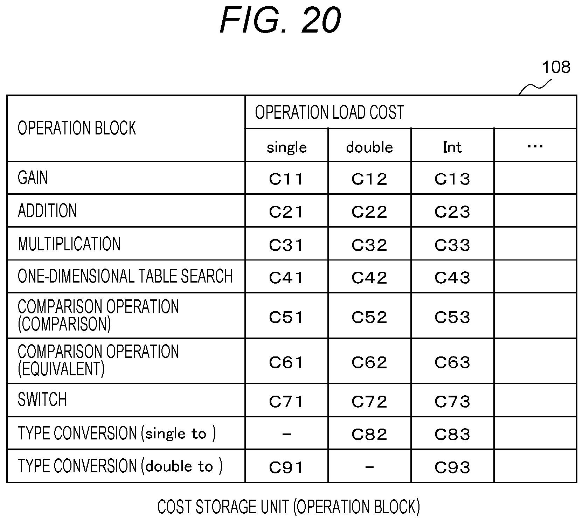

FIG. 20 is a diagram illustrating an example of a cost database included in the cost storage unit 108 according to the present embodiment, and illustrates an example of a cost database in which an operation load cost for each operation block is recorded.

As illustrated in FIG. 20, since a processing time of each operation varies depending on the data type, a cost for each data type is stored in advance in the cost storage unit 108. Furthermore, since the number of type conversion cycles also varies depending on the data type, the number of type conversion cycles is stored in advance in the cost storage unit 108.

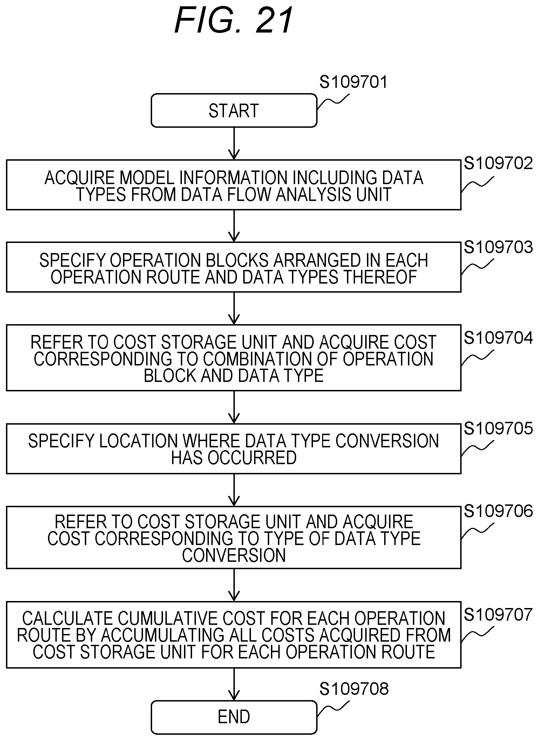

FIG. 21 is a flowchart of processing executed by the route cost evaluation unit 109 according to the present embodiment.

As illustrated in the flowchart, the route cost evaluation unit 109 starts the processing from step S109701.

In step S109702, the route cost evaluation unit 109 acquires, from the data flow analysis unit 701, model information including information on data types of signal lines and data types of constants and parameters set in the blocks.

In step S109703, the route cost evaluation unit 109 specifies all the operation blocks included in the control model 101 and input data types thereof from the model information including the data type information.

In step S109704, the route cost evaluation unit 109 refers to the cost storage unit 108 and acquires a cost corresponding to each combination of an operation block and a data type.

In step S109705, the route cost evaluation unit 109 specifies a location where data type conversion has occurred.

In step S109706, the route cost evaluation unit 109 refers to the cost storage unit 108 and acquires a cost corresponding to each type of data type conversion.

In step S109707, the route cost evaluation unit 109 calculates a cumulative cost for each operation route by accumulating all the cost corresponding to the combination of the operation block and the data type acquired in step S109704 and the cost of the data type conversion acquired in step S109706 for each operation route.

In step S109708, the route cost evaluation unit 109 ends the processing.

For example, the input data type of the gain block 10105 illustrated in FIG. 19 is double type, and the constant value 10 set in the gain block 10105 is also double type. At this time, a combination of the gain block 10105 and the double type is specified in step S109703, and C12, which is a cost of the double type of the gain block, is selected from the database of the cost storage unit 108 illustrated in FIG. 20 in step S109704.

In addition, for example, the input data type of the gain block 10105 is double type, the constant value 10 set in the gain block 10105 is also double type, and the data type of the output signal of the gain block 10105 is single type in FIG. **19.** Therefore, data type conversion from double type to single type occurs once, and such data type conversion is specified in step S109705. Thereafter, in step S109706, C91, which is a cost of conversion from double type to single type is selected from the database of the cost storage unit 108 illustrated in FIG. 20.

By applying above-described concept, a cumulative cost $C_{MR1}$ of all operation blocks executed when the main operation route MR1 is selected is C12+C91+C71+C71+C51+C61.

According to the present embodiment, a processing load that cannot be estimated only from block information can be estimated in consideration of the data type, and a processing load can be estimated with higher accuracy than that in a case only the operation block information is used.

Note that the seventh embodiment does not necessarily require the simulation unit 105 and the result processing unit 107, and can be independently implemented only by the processing load estimation unit 106.

Although a plurality of embodiments of the present invention have been described above, two or more embodiments can be arbitrarily combined.

As described above, according to the embodiments of the present invention, it is possible to estimate performance such as an average processing time, a minimum processing time, and a maximum processing time with higher accuracy at an early stage upstream of the design process, and it is possible to reduce the amount of work for development by preventing rework. In addition, by providing a practical processing time in consideration of an actual use case, it can be utilized to evaluate the performance of not only a single software component but also the entire system.

Note that the present invention is not limited to the above-described embodiments, and covers various modifications and equivalent configurations within the spirit of the appended claims. For example, the above-described embodiments have been described in detail for easy understanding of the present invention, and the present invention is not necessarily limited to having all the configurations described above. Furthermore, a part of the configuration of one embodiment may be replaced with the configuration of another embodiment. In addition, the configuration of one embodiment may be added to the configuration of another embodiment. In addition, a part of the configuration of each embodiment may be added to, deleted from, or replaced with another configuration.

In addition, some or all of the above-described configurations, functions, processing units, processing means, and the like may be realized with hardware, for example, by designing them with integrated circuits, or may be realized with software by a processor interpreting and executing a program for realizing each function.

Information such as a program, a table, and a file for realizing each function can be stored in a storage device such as a memory, a hard disk, or a solid state drive (SSD), or in a recording medium such as an IC card, an SD card, and a DVD.

In addition, the control lines and information shown are those considered necessary for explanation, and do not necessarily indicate all the control lines and information lines necessary for implementation. It may be considered that almost all the components are connected to each other in reality.

Reference Signs List

| | |
|---|---|
| 100 | software component |
| 101 | control model |
| 102 | software component input unit |
| 103 | test suite |
| 104 | test suite input unit |
| 105 | simulation unit |
| 106 | processing load estimation unit |
| 107 | result processing unit |
| 108 | cost storage unit |
| 109 | route cost evaluation unit |
| 201 | program |
| 501 | memory analysis unit |
| 701 | data flow analysis unit |

**Claims**

1. A processing load estimation system including an operation device that executes predetermined processing, and a storage device to which the operation device is accessible, the processing load estimation system comprising:

   a software component input unit to which a software component having a different operation route according to an input value is input, the software component input unit including a plurality of operation elements for realizing a predetermined operation flow;
   a test suite input unit to which a test suite to be provided to the software component is input;
   a processing load estimation unit causing the operation device to estimate a processing load for each operation route;
   a simulation unit causing the operation device to perform a simulation of the software component based on the test suite and output a dynamic feature obtained from a plurality of simulation results; and
   a result processing unit causing the operation device to process the dynamic feature output from the simulation unit,
   wherein the result processing unit estimates a practical processing load of the software component based on the dynamic feature, a plurality of operation results corresponding to the input value, and the processing load for each route.

2. The processing load estimation system according to claim 1, wherein the operation elements are operation blocks in a model constituting the software component.

3. The processing load estimation system according to claim 1, wherein the operation elements are operators in software constituting the software component.

4. The processing load estimation system according to claim 1, wherein the result processing unit estimates the practical processing load based on a value related to an operation amount obtained as the dynamic feature from the simulation results.

5. The processing load estimation system according to claim 1, wherein the result processing unit estimates the practical processing load based on a standard deviation calculated from a variation in operation load obtained by the simulation.

6. The processing load estimation system according to claim 1, wherein the result processing unit estimates the practical processing load by excluding an operation route that has not been passed through in the simulation among theoretical operation routes based on the software component.

7. The processing load estimation system according to claim 1, wherein the result processing unit estimates the practical processing load based on a frequency of passage for each operation route in the simulation.

8. The processing load estimation system according to claim 7, wherein the result processing unit estimates the practical processing load by excluding an operation route for which the frequency of passage in the simulation is equal to or smaller than a predetermined threshold value.

9. The processing load estimation system according to any one of claims 1 to 8, wherein

   the processing load estimation unit includes a cost storage unit that stores processing loads of the operation elements, and a route cost evaluation unit that calculates a cumulative cost obtained by accumulating costs for each operation route, and
   the route cost evaluation unit estimates a processing load for each operation route based on the cumulative cost.

10. The processing load estimation system according to claim 9, wherein

    the processing load estimation unit includes a memory analysis unit that analyzes an operation element related to a memory attribute of the software component,
the cost storage unit stores costs corresponding to write and read delay times for each memory attribute of the software component obtained from the memory analysis unit, and
the processing load estimation unit estimates a processing load in consideration of the delay times.

11. The processing load estimation system according to claim 9, wherein

the cost storage unit stores a cost of a combination of specific operation elements, and
the route cost evaluation unit detects the combination of specific operation elements, and estimates a processing load for each operation route using a cost associated with the detected combination of specific operation elements.

12. The processing load estimation system according to claim 9, wherein

the processing load estimation unit includes a data flow analysis unit that analyzes a data flow, and
the route cost evaluation unit estimates a processing load for each operation route based on an analysis result of the data flow analysis unit.

13. The processing load estimation system according to claim 12, wherein

the cost storage unit stores a different cost according to a difference in data type, and
the route cost evaluation unit estimates a processing load for each operation route using a cost corresponding to the difference in data type.

14. The processing load estimation system according to claim 12, wherein

the cost storage unit stores a cost of data type conversion,
the data flow analysis unit detects data type conversion, and
the route cost evaluation unit estimates a processing load for each operation route using a cost corresponding to a difference in data type conversion.

15. A processing load estimation method executed by a processing load estimation system including an operation device that executes predetermined processing, and a storage device to which the operation device is accessible, the processing load estimation method comprising:

a software component input step of inputting a software component having a different operation route according to an input value, with the processing load estimation system including a plurality of operation elements for realizing a predetermined operation flow;
a test suite input step of inputting a test suite to be provided to the software component;
a processing load estimation step of estimating a processing load for each operation route by the operation device;
a simulation step of performing a simulation of the software component based on the test suite and outputting a dynamic feature obtained from a plurality of simulation results by the operation device; and
a result processing step of processing the dynamic feature output from the simulation unit by the operation device,
wherein in the result processing step, the operation device estimates a practical processing load of the software component based on the dynamic feature, a plurality of operation results corresponding to the input value, and the processing load for each route.

# FIG. 1

PROCESSING LOAD ESTIMATION SYSTEM 1

PROCESSING LOAD ESTIMATION UNIT

COST STORAGE UNIT 108

ROUTE COST EVALUATION UNIT 109

CONTROL MODEL 101

PROGRAM 201

100

SOFTWARE COMPONENT INPUT UNIT 102

106

SIMULATION UNIT 105

RESULT PROCESSING UNIT 107

TEST SUITE 103

TEST SUITE INPUT UNIT 104

ESTIMATED PRACTICAL PROCESSING TIME

# FIG. 2

# FIG. 3

# FIG. 4

108

| OPERATION BLOCK | OPERATION LOAD COST |
|---|---|
| GAIN | C1 |
| ADDITION | C2 |
| MULTIPLICATION | C3 |
| ONE-DIMENSIONAL TABLE SEARCH | C4 |
| COMPARISON OPERATION (COMPARISON) | C5 |
| COMPARISON OPERATION (EQUIVALENT) | C6 |
| SWITCH | C7 |

COST STORAGE UNIT (OPERATION BLOCK)

# FIG. 5

| OPERATION ROUTE | CUMULATIVE COST |
|---|---|
| MR1 | $C_{MR1} = C1 + C7 + C7 + C_{SR1} + C_{SR2}$ |
| MR2 | $C_{MR2} = C2 + C7 + C7 + C_{SR1} + C_{SR2}$ |
| MR3 | $C_{MR3} = C3 + C4 + C7 + C_{SR2}$ |
| SR1 | $C_{SR1} = C5$ |
| SR2 | $C_{SR2} = C6$ |

CUMULATIVE COST FOR EACH OPERATION ROUTE

# FIG. 6

103

| TEST CASE 1 | | | | | |
|---|---|---|---|---|---|
| TIME | INPUT SIGNAL 1 | INPUT SIGNAL 2 | INPUT SIGNAL 3 | INPUT SIGNAL 4 | PARAMETER 1 |
| 0.001 | 1 | 5 | 4 | 0.4 | 1 |
| 0.002 | 2 | 20 | 3 | 1.52 | 1 |
| 0.003 | 3 | 8 | 1.5 | 0.95 | 1 |
| . . . | | | | | |

TEST SUITE

# FIG. 7

| TEST CASE 1 | | |
|---|---|---|
| TIME | OUTPUT PORT 1 | OPERATION ROUTE |
| 0.001 | 10 | MR1 |
| 0.002 | 23 | MR2 |
| 0.003 | 30 | MR1 |
| . . . | | |

SIMULATION RESULT INFORMATION

# FIG. 8

START — S107101

ACQUIRE SIMULATION RESULT FROM SIMULATION UNIT — S107102

ACQUIRE CUMULATIVE COST FOR EACH OPERATION ROUTE FROM PROCESSING LOAD ESTIMATION UNIT — S107103

CALCULATE AVERAGE CUMULATIVE COST BASED ON SIMULATION RESULT AND CUMULATIVE COST FOR EACH OPERATION ROUTE — S107104

CALCULATE VARIATION IN CUMULATIVE COST AND CALCULATE STANDARD DEVIATION — S107105

CALCULATE MAXIMUM CUMULATIVE COST FROM STANDARD DEVIATION AND AVERAGE CUMULATIVE COST — S107106

EXTRACT MAXIMUM CUMULATIVE COST FROM AMONG CUMULATIVE COSTS FOR OPERATION ROUTES — S107107

DOES CALCULATED MAXIMUM CUMULATIVE COST EXCEED MAXIMUM CUMULATIVE COST ON OPERATION ROUTES? — S107108

YES

NO

S107110 — ESTIMATE MAXIMUM CUMULATIVE COST ON ROUTES AS MAXIMUM PROCESSING TIME

ESTIMATE MAXIMUM CUMULATIVE COST CALCULATED FROM STANDARD DEVIATION AS MAXIMUM PROCESSING TIME — S107109

END — S107111

20

# FIG. 9

| TEST CASE 1 | | | | |
|---|---|---|---|---|
| TIME | OUTPUT PORT 1 | OPERATION ROUTE | CUMULATIVE COST | DEVIATION (d) |
| 0.001 | 10 | MR1 | $C_{MR1}$ | $C_{MR1} - C_\mu$ |
| 0.002 | 23 | MR2 | $C_{MR2}$ | $C_{MR2} - C_\mu$ |
| 0.003 | 30 | MR1 | $C_{MR1}$ | $C_{MR1} - C_\mu$ |
| ... | | | | |

DEVIATION CALCULATION RESULT

# FIG. 10

CUMULATIVE COST

MAXIMUM PROCESSING TIME IN TEST SUITE

THEORETICALLY MAXIMUM PROCESSING TIME

PRACTICAL MAXIMUM PROCESSING TIME CALCULATED USING STANDARD DEVIATION

REGION EXECUTED IN TEST SUITE

PRACTICAL MINIMUM PROCESSING TIME OBTAINED BY APPLYING FIRST EMBODIMENT

THEORETICALLY MINIMUM PROCESSING TIME

TIME t

MINIMUM PROCESSING TIME OF TEST SUITE

IMAGE OF PRACTICAL PROCESSING TIME

EP 4 636 597 A1

# FIG. 11A

```
                              S20101
                  ┌─────────┐
                  │  START  │
                  └────┬────┘
                              S20102
                  ╱◇◇◇◇◇◇◇◇◇╲
                  ◇ CONDITION 1 ◇──── YES ──────── BRANCH 1
                  ╲◇◇◇◇◇◇◇◇◇╱                              S20103
               NO │ BRANCH 2                    ┌───────────┐
                  │                             │ COMMAND 1 │
                  │                             └─────┬─────┘
                  │◄────────────────────────────────┘
                              S20104
                  ╱◇◇◇◇◇◇◇◇◇╲
                  ◇ CONDITION 2 ◇──── YES ──────── BRANCH 3
                  ╲◇◇◇◇◇◇◇◇◇╱
               NO │ BRANCH 4
        S20106    │                    S20105
   ┌───────────┐  │            ┌───────────┐
   │ COMMAND 3 │  │            │ COMMAND 2 │
   └─────┬─────┘               └─────┬─────┘
         │◄─────────────────────────┘
                    S20107
   ┌─────────┐
   │   END   │
   └─────────┘
```

# FIG. 11B

| OPERATION ROUTE | DETAIL OF ROUTE |
|---|---|
| R1 | BRANCH 1+BRANCH 3 |
| R2 | BRANCH 1+BRANCH 4 |
| R3 | BRANCH 2+BRANCH 3 |
| R4 | BRANCH 2+BRANCH 4 |

## FIG. 12

108

| OPERATION BLOCK | OPERATION LOAD COST |
|---|---|
| AND | C21 |
| OR | C22 |
| ADD | C23 |
| SUB | C24 |
| MUL | C25 |
| DIV | C26 |
| CMP | C27 |

COST STORAGE UNIT (CPU OPERATION ELEMENT)

## FIG. 13

START — S107201

ACQUIRE SIMULATION RESULT FROM SIMULATION UNIT — S107202

ACQUIRE CUMULATIVE COST FOR EACH OPERATION ROUTE FROM PROCESSING LOAD ESTIMATION UNIT — S107203

SPECIFY OPERATION ROUTE THAT IS NOT EXECUTED FROM SIMULATION RESULT — S107204

IS THERE OPERATION ROUTE THAT IS NOT EXECUTED? — S107205

YES

NO

ESTIMATE PROCESSING TIME USING CUMULATIVE COSTS EXCLUDING OPERATION ROUTE THAT IS NOT EXECUTED — S107206

ESTIMATE PROCESSING TIME USING CUMULATIVE COSTS FOR ALL OPERATION ROUTES — S107207

END — S107208

## FIG. 14

START — S107301

ACQUIRE SIMULATION RESULT FROM SIMULATION UNIT — S107302

ACQUIRE CUMULATIVE COST FOR EACH OPERATION ROUTE FROM PROCESSING LOAD ESTIMATION UNIT — S107303

CALCULATE PASSAGE RATE FOR EACH OPERATION ROUTE FROM SIMULATION RESULT. — S107304

IS THERE OPERATION ROUTE HAVING PASSAGE RATE SMALLER THAN THRESHOLD VALUE? — S107305

YES

S107306 — ESTIMATE PROCESSING TIME USING CUMULATIVE COSTS FOR OPERATION ROUTES EXCLUDING OPERATION ROUTE HAVING PASSAGE RATE SMALLER THAN THRESHOLD VALUE

NO

ESTIMATE PROCESSING TIME USING CUMULATIVE COSTS FOR ALL ROUTES — S107307

END — S107308

## FIG. 15

| OPERATION ROUTE | PASSAGE RATE |
| --- | --- |
| MR1 | 39.99999% |
| MR2 | 60.0% |
| MR3 | 0.001% |
| ... | |

EXAMPLES OF PASSAGE RATES

## FIG. 16

## FIG. 17

| MEMORY OPERATION BLOCK | OPERATION LOAD COST | APPLICATION CONDITION |
|---|---|---|
| INPUT PORT | C51 | MODEL INTERFACE ONLY |
| OUTPUT PORT | C52 | MODEL INTERFACE ONLY |
| CONSTANT | C53 | ONLY WHEN PARAMETER IS SET |

COST STORAGE UNIT (MEMORY OPERATION BLOCK)

# FIG. 18

# FIG. 19

# FIG. 20

108

| OPERATION BLOCK | OPERATION LOAD COST | | | |
|---|---|---|---|---|
| | single | double | Int | ··· |
| GAIN | C11 | C12 | C13 | |
| ADDITION | C21 | C22 | C23 | |
| MULTIPLICATION | C31 | C32 | C33 | |
| ONE-DIMENSIONAL TABLE SEARCH | C41 | C42 | C43 | |
| COMPARISON OPERATION (COMPARISON) | C51 | C52 | C53 | |
| COMPARISON OPERATION (EQUIVALENT) | C61 | C62 | C63 | |
| SWITCH | C71 | C72 | C73 | |
| TYPE CONVERSION (single to ) | – | C82 | C83 | |
| TYPE CONVERSION (double to ) | C91 | – | C93 | |

COST STORAGE UNIT (OPERATION BLOCK)

# FIG. 21

START — S109701

ACQUIRE MODEL INFORMATION INCLUDING DATA TYPES FROM DATA FLOW ANALYSIS UNIT — S109702

SPECIFY OPERATION BLOCKS ARRANGED IN EACH OPERATION ROUTE AND DATA TYPES THEREOF — S109703

REFER TO COST STORAGE UNIT AND ACQUIRE COST CORRESPONDING TO COMBINATION OF OPERATION BLOCK AND DATA TYPE — S109704

SPECIFY LOCATION WHERE DATA TYPE CONVERSION HAS OCCURRED — S109705

REFER TO COST STORAGE UNIT AND ACQUIRE COST CORRESPONDING TO TYPE OF DATA TYPE CONVERSION — S109706

CALCULATE CUMULATIVE COST FOR EACH OPERATION ROUTE BY ACCUMULATING ALL COSTS ACQUIRED FROM COST STORAGE UNIT FOR EACH OPERATION ROUTE — S109707

END — S109708

## INTERNATIONAL SEARCH REPORT

| International application No. |
|---|
| **PCT/JP2022/045930** |

| A. | CLASSIFICATION OF SUBJECT MATTER |
|---|---|

*G06F 11/34*(2006.01)i
FI:   G06F11/34 157

According to International Patent Classification (IPC) or to both national classification and IPC

| B. | FIELDS SEARCHED |
|---|---|

Minimum documentation searched (classification system followed by classification symbols)

G06F11/34

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2011-154521 A (HITACHI ADVANCED DIGITAL INC) 11 August 2011 (2011-08-11) entire text, all drawings | 1-15 |
| A | JP 2014-102734 A (RENESAS ELECTRONICS CORP) 05 June 2014 (2014-06-05) entire text, all drawings | 1-15 |
| A | JP 2020-160923 A (MITSUBISHI ELECTRIC CORP) 01 October 2020 (2020-10-01) entire text, all drawings | 1-15 |
| A | JP 2009-258831 A (MITSUBISHI ELECTRIC CORP) 05 November 2009 (2009-11-05) entire text, all drawings | 1-15 |
| A | US 2019/0370155 A1 (THE MATHWORKS, INC.) 05 December 2019 (2019-12-05) entire text, all drawings | 1-15 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 February 2023** | **07 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/045930**

| Patent document cited in search report | | | Publication date (day/month/year) | Patent family member(s) | | | Publication date (day/month/year) |
|---|---|---|---|---|---|---|---|
| JP | 2011-154521 | A | 11 August 2011 | (Family: none) | | | |
| JP | 2014-102734 | A | 05 June 2014 | (Family: none) | | | |
| JP | 2020-160923 | A | 01 October 2020 | (Family: none) | | | |
| JP | 2009-258831 | A | 05 November 2009 | (Family: none) | | | |
| US | 2019/0370155 | A1 | 05 December 2019 | EP | 3575990 | A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009258831 A

- JP 2011154521 A